# EUROPÄISCHE PATENTSCHRIFT

(11) **EP 1 789 275 B1**
(45) Veröffentlichungstag und Bekanntmachung des Hinweises auf die Patenterteilung: **20.07.2011**
(21) Anmeldenummer: 05784814.5
(22) Anmeldetag: 01.09.2005
(51) Int. Cl.: B60J 7/20, E05B 65/19

(54) **CABRIOLET-FAHRZEUG**
CABRIOLET
VEHICULE CABRIOLET

(30) Priorität: 01.09.2004 DE 102004042261
(43) Veröffentlichungstag der Anmeldung: 30.05.2007
(73) Patentinhaber: Wilhelm Karmann GmbH, 49084 Osnabrück (DE)
(72) Erfinder: SELLE, Heinrich, 32549 Bad Oeynhausen (DE); HEIDTMANN, Hermann, 49740 Haselünne (DE)
(74) Vertreter: Kronthaler, Schmidt & Coll.
(86) Internationale Anmeldenummer: PCT/DE2005/001539
(87) Internationale Veröffentlichungsnummer: WO 2006/024290

(56) Entgegenhaltungen:
- EP-A- 0 492 006
- DE-A1- 10 218 307
- DE-C2- 19 650 402

## Beschreibung

Die Erfindung betrifft ein Cabriolet-Fahrzeug mit einem unterhalb eines Deckelteils ablegbaren Dach nach dem Oberbegriff des Anspruchs 1 sowie eine zugehörige Verschlußsteuerung.

Es sind zahlreiche Cabriolet-Fahrzeuge bekannt, bei denen das bewegbare Dach in seiner offenen Stellung unterhalb eines Deckelteils abgelegt werden kann. Das Deckelteil ist dafür häufig in seinem hinteren Bereich an der Karosserie angelenkt und muß in seiner im wesentlichen horizontalen Schließstellung über dem geschlossenen Dach zur Sicherung an der Karosserie gehalten sein. Hierzu können zwei seitlich außen liegende Eingriffsglieder, etwa Drehfallen, Fanghaken oder ähnliches, dienen, die über eine an einer den Dachaufnahmeraum nach vorne begrenzenden Zwischenwand gehaltene Verschlußsteuerung zu betätigen sind. Die Eingriffsglieder können dabei über im wesentlichen quer zum Fahrzeug erstreckte Kraftvermittler, etwa Ketten, Seilzüge oder insbesondere Zug- und/oder Schubstangen, mit einem zentralen motorischen Antrieb der Verschlußsteuerung verbunden sein.

Der Antrieb benötigt herkömmlicherweise einen erheblichen Raum und steht somit in den Kofferraum bzw. Dachablageraum vor, wodurch dieser verkleinert ist. Zudem ergibt sich ein hoher baulicher Aufwand für übliche Verschlußsteuerungen.

Die DE 196 50 402 C2 zeigt einen Antrieb, der quer im Fahrzeug liegt und über ein Umlenkgetriebe die Antriebskraft auf ein um eine in Fahrzeuglängsrichtung liegende Achse drehbares Ritzel einleitet. Dieses wirkt bei seiner Drehung dann auf ober- und unterhalb gelegene und quer auswärts bewegliche Zahnstangen als Kraftvermittler ein. Die Antriebskraft muß damit vom Antrieb hinter dem Ritzel um ca. 90° umgelenkt werden. Das Antriebsorgan muß deutlich hinter den Kraftvermittlern liegen, so daß eine erhebliche Tiefe benötigt wird und Kofferraum verloren geht.

Der Erfindung liegt das Problem zugrunde, eine Verringerung des Platzbedarfs und eine Vereinfachung der Verschlußsteuerung zu erreichen.

Die Erfindung löst dieses Problem durch ein Cabriolet-Fahrzeug mit den Merkmalen des Anspruchs 1 sowie durch ein Verschlußmodul mit den Merkmalen des Anspruchs 9. Hinsichtlich vorteilhafter Ausgestaltungen der Erfindung wird auf die weiteren Ansprüche 2 bis 8 verwiesen.

Mit der erfindungsgemäßen Ausbildung kann die Verschlußsteuerung erheblich verkleinert werden. Dadurch, daß der Antrieb ein zumindest nahezu in Fahrzeugquerrichtung und in der Ebene der Kraftvermittler liegendes Antriebsorgan umfaßt, ist dessen vorstehen in den Kofferraum oder Dachablageraum verhindert. Dadurch, daß über ein geradlinig und parallel zu dem Antriebsorgan bewegliches und mit einem ersten Kraftvermittler verbundenes Kopplungsorgan ein die Bewegungsrichtung für einen zweiten Kraftvermittler umlenkendes Getriebe bewegbar ist, kann auch dieses Getriebe eine Erstreckung im wesentlichen parallel zur Zwischenwand ohne weit vorstehende Teile aufweisen. Zudem ist durch die direkte Anbindung eines ersten Kraftvermittlers an das geradlinig bewegbare Kopplungsorgan der Aufbau vereinfacht. Der erste Kraftvermittler kann zum Beispiel in der Erstreckungsebene eines Ritzels mit diesem gekoppelt sein und muß daher nicht gegenüber diesem nach hinten vorstehen.

In der Weiterbildung nach Anspruch 2 ist sichergestellt, daß der Antrieb auch durch eine manuelle Notbetätigung raumsparend ausgeführt werden kann.

Wenn hierfür mehrere Kopplungsmöglichkeiten an einem einzigen Übertragungselement verwirklicht sind, ist der Aufbau weiter vereinfacht. Sofern zumindest eine der Kopplungsmöglichkeiten von einem Zahnstangenabschnitt gebildet ist, kann ein zuverlässiger Kraftschluß zwischen linear geradlinig bewegten Teilen und rotierenden Teilen erreicht werden.

Eine gute Zugänglichkeit für eine Notbetätigung wird dabei insbesondere erreicht, wenn die Kopplungsmöglichkeiten senkrecht zueinander stehen. Besonders vorteilhaft ergibt sich eine zuverlässige und raumsparende Kraftübertragung vom Antriebsorgan, wenn hierfür ein Übertragungselement parallel zu einem ausschiebbaren Kolben eines Antriebsorgans angeordnet ist und über das Übertragungselement ein Zahnrad rotierbar und von diesem ein zweites geradlinig bewegliches Übertragungselement antreibbar ist.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische, im vorderen Bereich abgebrochene Seitenansicht eines erfin- dungsgemäßen Cabriolet-Fahrzeugs bei ober- halb eines Dachaufnahmeraums geöffnetem Deckelteil,

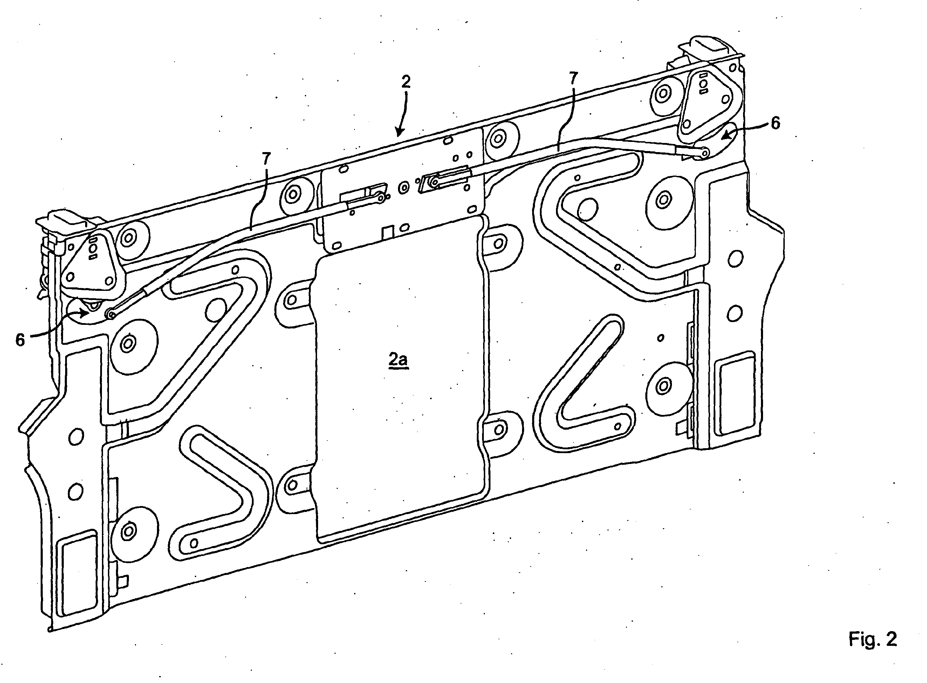

- Fig. 2: die den Dachaufnahmeraum nach vorne be- grenzende Zwischenwand in Ansicht von vor- ne,

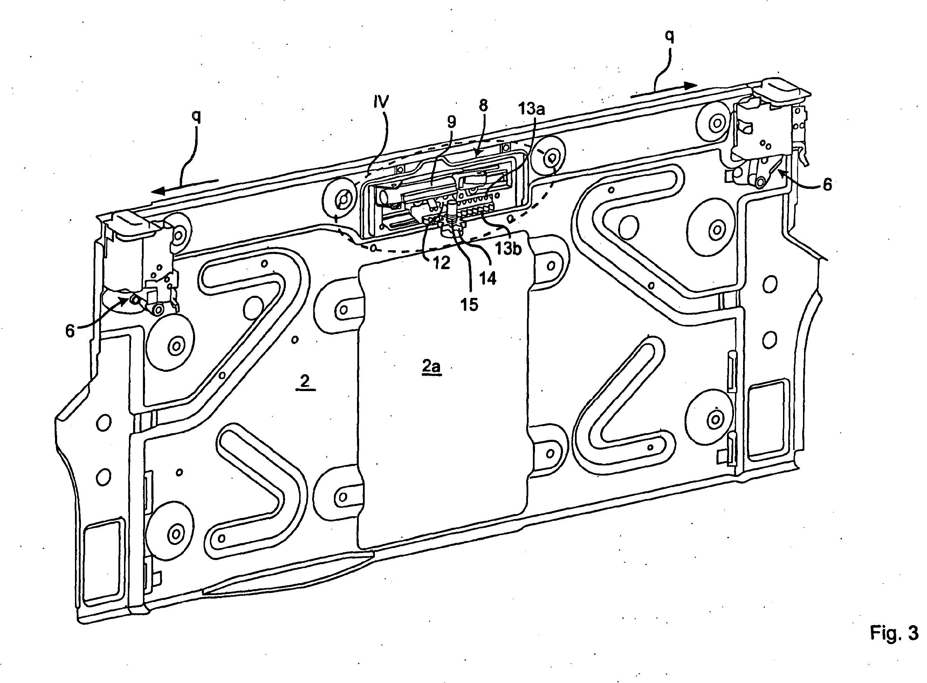

- Fig. 3: die Zwischenwand nach Fig. 2 in Ansicht von hinten,
- Fig. 4: das im wesentlichen ein Verschlußmodul umfassende Detail IV in Fig. 3,
- Fig. 5: eine ähnliche Ansicht wie Fig. 4 mit zu- sätzlichem stabilisierendem Rahmen für die Notbetätigung,
- Fig. 6: eine ähnliche Ansicht wie Fig. 5 mit be- züglich der vertikalen Lage teilweise ver- tauscht angeordneten Teilen.

Das erfindungsgemäße Cabriolet-Fahrzeug 1 kann als sog. Soft-Top-Fahrzeug mit zumindest bereichsweise einem flexiblen Dachbezug oder mit festen Dachteilen ausgebildet sein.

Ebenso kann das Fahrzeug 1 sowohl ein Zweisitzer sein als auch einen größeren Innenraum mit etwa zwei Sitzreihen hintereinander aufweisen.

Es umfaßt in jedem Fall ein bewegliches Dach, das zu seiner Öffnung im rückwärtigen Fahrzeugbereich in einem Aufnahmeraum 3 ablegbar ist.

Der Aufnahmeraum 3 ist bezüglich der Fahrtrichtung F vorderseitig von einer Zwischenwand 2 begrenzt, die beispielsweise mit einer Ausnehmung 2a als Durchladeeinrichtung versehen sein kann.

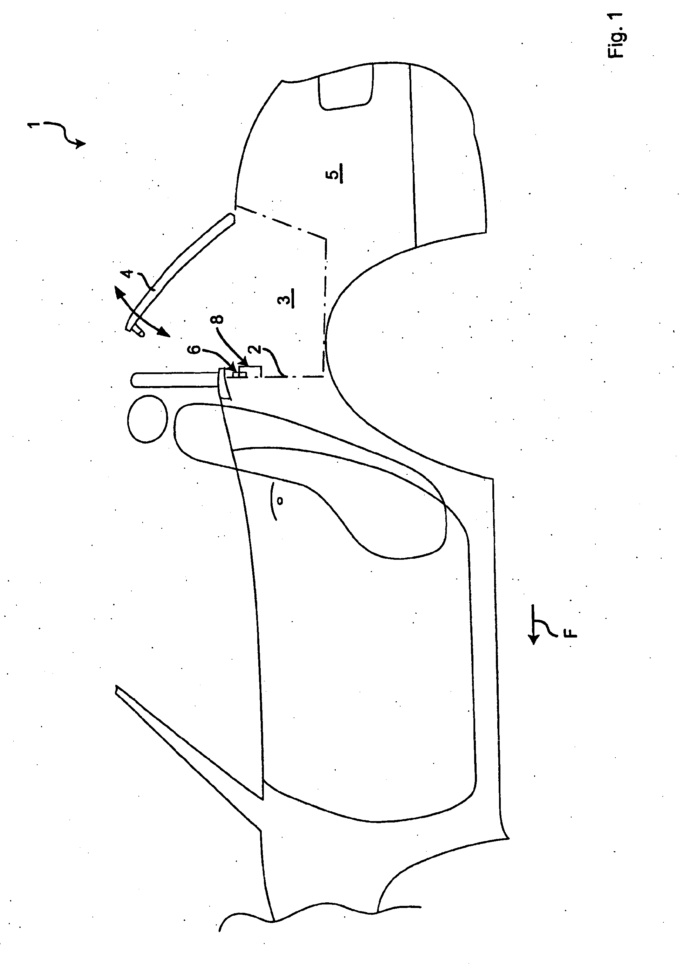

Oberseitig ist der Aufnahmeraum 3 von einem Deckelteil 4 zumindest teilweise verschließbar. Dieses ist in Fig. 1 in halb geöffneter Stellung dargestellt. Das Deckelteil 4 ist hier an seinem rückwärtigen Bereich schwenkbar an der Karosserie 5 angelenkt, könnte jedoch auch translatorisch oder in einer überlagerten Bewegung zu öffnen und zu schließen sein. Auch ist es möglich, daß das Deckelteil 4 gegenüber der Zeichnung vergrößert ist und in Doppelfunktion auch eine Kofferraumklappe darstellt, die in zwei zueinander gegensinnigen Schwenkbewegungen zu öffnen ist.

In jedem Fall ist das Deckelteil 4 in seiner geschlossenen Stellung (nicht gezeichnet) an der Karosserie 5 verriegelt.

Hierzu dienen in den gezeichneten Ausführungsbeispielen zwei in Fahrzeugquerrichtung q seitlich mehr oder weniger weit außen liegende Eingriffsorgane, die etwa hakenartig ausgebildet und um je nach baulichen Verhältnissen liegende Achsen schwenkbar sind. Sie können jedoch in unterschiedlichsten Weisen ausgebildet sein und zum Ver- oder Entriegeln auch translatorische oder überlagerte Rotations- und Translationsbewegungen ausführen. Auch ist ihre Anzahl variabel. So kann beispielsweise auch noch ein zentrales Eingriffsorgan zusätzlich vorgesehen sein.

Die Eingriffsorgane 6 sind über von einem hier zentralen Verschlußmodul 8 ausgehende, seitlich ausgreifende Kraftvermittler 7 beweglich. Diese sind gemäß der Zeichnung als Zug-Schub-Stangen ausgebildet. Auch Ketten, Seilzüge, Wellen, Zahnriemen oder ähnliches kommen in Betracht. Häufig wird in Schließstellung der Eingriffsorgane 6 eine ÜberTotpunkt-Lage eingestellt. Dann ist eine solche bei der Bewegung der Zug-Schub-Stangen 7 entbehrlich. Diese können vielmehr zwischen der Schließ- und der Offenstellung einfach geradlinig bewegt werden. Dem Verschlußmodul 8, das auch außermittig liegen kann, ist ein Antrieb für die als Schlösser wirkenden Eingriffsorgane 6 zugeordnet, der beispielsweise ein hydraulisches 9 oder elektrisches Antriebsorgan umfassen kann.

In der Zeichnung ist ein hydraulisches Antriebsorgan 9 dargestellt. Dieses ist an dem Verschlußmodul 8 vormontierbar und liegt zumindest nahezu parallel zur Fahrzeugquerrichtung q und nahezu in der Ebene der Zug-Schub-Stangen 7, somit im wesentlichen horizontal und sehr nah an der Zwischenwand 2, ohne weit in den Aufnahmeraum 3, der bei geschlossenem Dach auch als Kofferraum mitgenutzt werden kann, hineinzuragen.

Parallel zum Antriebsorgan 9 ist ein mit dessen ausschiebbarem Kolben verbundenes Kopplungsorgan 10 angeordnet. Dieses ist hier als Zahnstange ausgebildet und geradlinig und parallel zum Kolben beweglich. Ein erster Kraftvermittler 7 ist an dem Kopplungsorgan 10 gehalten und somit unmittelbar von diesem beweglich. Für die Geradlinigkeit der Bewegung können Führungskulissen vorgesehen sein.

Neben dem direkten Antrieb der zumindest im wesentlichen translatorischen Bewegung dieser Zug-Schub-Stange 7 greift das Kopplungsorgan 10 auch noch an einem die Bewegungsrichtung für eine zweite Zug-Schub-Stange 7 umlenkenden Getriebe 11 an. Das Getriebe 11 umfaßt hierzu ein um eine im wesentlichen in Fahrzeuglängsrichtung liegende Achse rotierbares Zahnrad 12, das die Antriebskraft auf ein ebenfalls geradlinig bewegbares zweites Übertragungselement 13 überträgt, das dadurch antiparallel zum ersten beweglich ist. Das zweite Übertragungselement 13 ist über eine zweite Zug-Schub-Stange 7 mit einem gegenüberliegenden Eingriffsorgan 6 verbunden. Dadurch, daß der Antrieb 9 nicht auf der Achse des Zahnrads 12 liegt, ist die Erstreckung der Anordnung in Fahrzeuglängsrichtung erheblich verringert.

Durch Ein- oder Ausfahren des Kolbens werden somit sowohl das als erstes Übertragüngselement der Antriebskraft wirkende Kopplungsorgan 10 als auch das zweite Übertragungselement 13 gleichzeitig gegenläufig zueinander bewegt und dabei die entsprechenden Zug-Schub-Stangen 7 mitgenommen.

Um auch bei Ausfall des Antriebsorgans 9 eine Notbetätigung zu ermöglichen, ist das Getriebe 11 manuell bewegbar.

Hierzu ist entweder das als erstes Übertragungselement dienende Kopplungsorgan 10 oder - wie hier gezeichnet - das zweite Übertragungselement 13 nicht nur mit einer Kopplungsmöglichkeit 13a für den Angriff des Antriebs 9 über das Zahnrad 12, sondern auch mit einer zweiten Kopplungsmöglichkeit 13b für das Angreifen einer manuellen Notbetätigung 14 versehen.

Beide Kopplungsmöglichkeiten 13a, 13b sind als Zahnstangenabschnitte ausgebildet und stehen im 90°-Winkel senkrecht aufeinander.

Für eine Notbetätigung kann der Hydraulikantrieb 9 drucklos geschaltet werden, so daß das Kopplungsorgan 10 auch während des manuellen Betriebs in Eingriff mit dem Kolben bleiben kann.

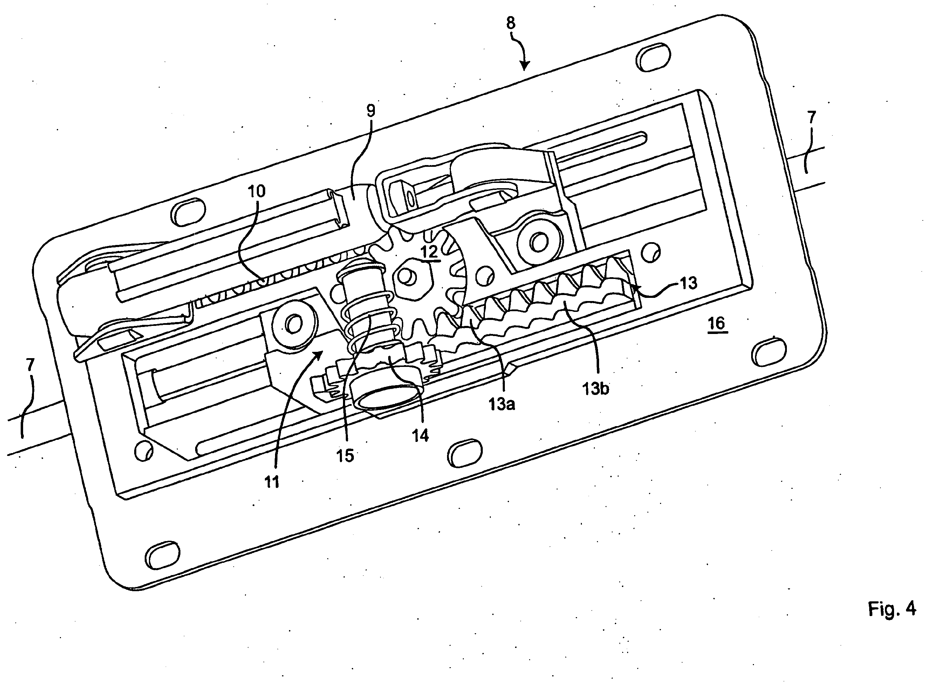

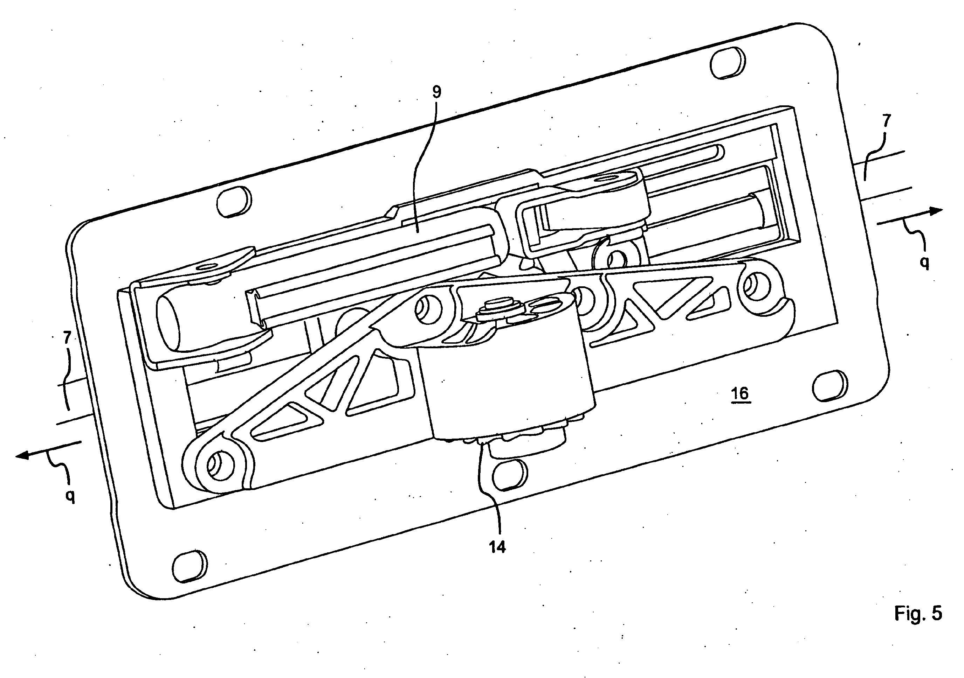

Für den manuellen Notbetrieb ist hier ein senkrecht zum Zahnrad 12 stehendes zweites Zahnrad 14 vorgesehen, das entgegen der Kraft einer Feder 15 in Eingriff mit der zweiten Kopplungsmöglichkeit 13b des Übertragungselements 13 bewegbar ist (Fig. 4). Alternativ kann das Zahnrad 14 auch ständig im Eingriff stehen und mitlaufen. Die Feder und die axiale Verschiebemöglichkeit sind dann entbehrlich. Wie in Fig. 5 sichtbar ist, kann die Notbetätigung von einem stabilen Rahmen umgeben und gegen äußere Einflüsse gesichert sein.

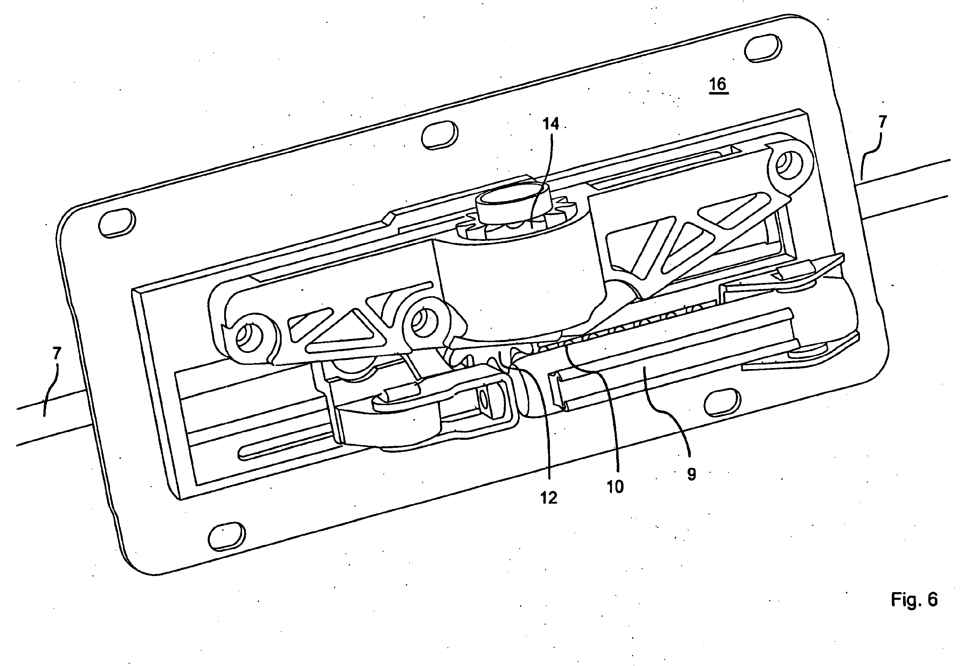

In Fig. 6 ist ein weiteres Ausführungsbeispiel mit Hydraulikzylinder 9 dargestellt, der hier jedoch in vertikaler Richtung gegen das Getriebe 11 getauscht wurde und somit unterhalb des Getriebes 11 liegt.

Eine Grundplatte 16 des Verschlußmoduls 8 kann so ausgebildet sein, daß wahlweise die eine oder andere Antriebsart montiert werden kann, so daß das Modul 8 sowohl bei Fahrzeugen mit elektrischer als auch mit hydraulischer Verschlußbetätigung ohne weitere Änderungen eingesetzt werden kann.

Das Verschlußmodul 8 kann in jedem Fall vor seinem Einbau vormontiert und getestet und als fertig eingestellte modulare Einheit an den Rohbau anmontiert werden.

## Patentansprüche

1. Cabriolet-Fahrzeug (1) mit einem in seiner offenen Stellung unterhalb eines Deckelteils (4) ablegbaren Dach, wobei zur Sicherung des geschlossenen Deckelteils (4) zumindest zwei bewegliche Eingriffsorgane (6) und zumindest ein Antrieb für diese vorgesehen sind, der zur Übertragung der Antriebskraft über jeweils mit einer Komponente in Fahrzeugquerrichtung ausgreifende Kraftvermittler (7) mit den Eingriffsorganen (6) in Wirkverbindung steht,
**dadurch gekennzeichnet,**
**daß** der Antrieb ein zumindest nahezu in Fahrzeugquerrichtung (q) und in der Ebene der Kraftvermittler (7) liegendes Antriebsorgan (9) umfaßt, wobei über ein geradlinig und parallel zu diesem bewegliches und mit einem ersten Kraftvermittler (7) verbundenes Kopplungsorgan (10) ein die Bewegungsrichtung für einen zweiten Kraftvermittler (7) umlenkendes Getriebe (11) bewegbar ist.

2. Cabriolet-Fahrzeug (1) nach Anspruch 1,
**dadurch gekennzeichnet,**
**daß** der Antrieb zumindest ein geradlinig bewegbares und mit einem Kraftvermittler (7) verbundenes Übertragungselement (10;13) umfaßt, das mit einer ersten Kopplungsmöglichkeit (13a) für das mittelbare oder unmittelbare Angreifen des Antrieborgans (9) und mit einer zweiten Kopplungsmöglichkeit (13b) für das Angreifen einer manuellen Notbetätigung (14) versehen ist.

3. Cabriolet-Fahrzeug (1) nach Anspruch 2,
**dadurch gekennzeichnet,**
**daß** zumindest eine der Kopplungsmöglichkeiten (13a;13b) von einem Zahnstangenabschnitt gebildet ist.

4. Cabriolet-Fahrzeug (1) nach einem der Ansprüche 2 oder 3,
**dadurch gekennzeichnet,**
**daß** die Kopplungsmöglichkeiten (13a;13b) senkrecht zueinander stehen.

5. Cabriolet-Fahrzeug (1) nach einem der Ansprüche 2 bis 4,
**dadurch gekennzeichnet,**
**daß** ein erstes Übertragungselement (10) parallel zu einem ausschiebbaren Kolben eines hydraulischen Antriebsorgans (9) angeordnet ist.

6. Cabriolet-Fahrzeug (1) nach Anspruch 5,
**dadurch gekennzeichnet,**
**daß** über das erste Übertragungselement (10) ein Zahnrad (12) rotierbar und von diesem ein zweites geradlinig bewegliches Übertragungselement (13) antreibbar ist.

7. Cabriolet-Fahrzeug (1) nach Anspruch 6,
**dadurch gekennzeichnet,**
**daß** die Übertragungselemente (10;13) gegenläufig zueinander beweglich sind.

8. Cabriolet-Fahrzeug (1) nach einem der Ansprüche 1 bis 7,
**dadurch gekennzeichnet,**
**daß** die Kraftvermittler (7) als Zug-Schub-Stangen ausgebildet sind.

9. Verschlußmodul (8) zur Ansteuerung von zumindest zwei beweglichen Eingriffsorganen (6) mit zumindest einem Antrieb (9) für diese, der zur Übertragung der Antriebskraft über jeweils mit einer Komponente in Fahrzeugquerrichtung (q) ausgreifende Kraftvermittler (7) mit den Eingriffsorganen in Wirkverbindung steht, für ein Cabriolet-Fahrzeug nach einem der Ansprüche 1 bis 8.

## Claims

1. A convertible vehicle (1) comprising a roof which, in its open position, can be stowed beneath a lid part (4), wherein at least two movable engagement members (6) and at least one drive for them are provided to secure the closed lid part (4), said drive being in operative communication with the engagement members (6) for transmission of the drive force via force communicators (7), each projecting outwardly with a component in the transverse vehicle direction, **characterised in that** the drive comprises a drive member (9) which is disposed at least substantially in the transverse vehicle direction (q) and in the plane of the force communicators (7), wherein a transmission (11) diverting the movement of a second force communicator (7) is movable via a coupling member (10) which is movable in a rectilinear fashion and parallel to the drive member (9) and is connected to a first force communicator (7).

2. The convertible vehicle (1) according to claim 1, **characterised in that** the drive comprises at least one transmission element (10; 13), which is movable in a rectilinear fashion, is connected to a force communicator (7), and is provided with a first coupling means (13a) for indirect or direct engagement of the drive member (9) and with a second coupling means (13b) for engagement of a manual emergency actuation mechanism (14).

3. The convertible vehicle (1) according to claim 2, **characterised in that** at least one of the coupling means (13a; 13b) is formed by a toothed rack portion.

4. The convertible vehicle (1) according to any one of claims 2 or 3, **characterised in that** the coupling means (13a; 13b) are perpendicular to one another.

5. The convertible vehicle (1) according to any one of claims 2 to 4, **characterised in that** a first transmission element (10) is arranged parallel to an extendable piston of a hydraulic drive member (9).

6. The convertible vehicle (1) according to claim 5, **characterised in that** a gear (12) can be rotated via the first transmission element (10) to drive a rectilinearly movable, second transmission element (13).

7. The convertible vehicle (1) according to claim 6, **characterised in that** the transmission elements (10; 13) can be moved in opposite directions relative to each other.

8. The convertible vehicle (1) according to any one of claims 1 to 7, **characterised in that** the force communicators (7) are provided as pull-push bars.

9. Closing module (8) for controlling at least two movable engagement members (6) with at least one drive (9) for them, said drive being in operative communication with the engagement members for transmission of the drive force via force communicators (7), each projecting outwardly with a component in the transverse vehicle direction (q), for a convertible vehicle according to any one of claims 1 to 8.

## Revendications

1. Véhicule cabriolet (1) avec un toit qui est escamotable dans sa position ouverte sous un élément de couvercle (4), dans lequel il est prévu au moins deux organes de prise mobiles (6) et au moins une commande pour ceux-ci pour le blocage dudit élément de couvercle (4) fermé, ladite commande coopérant avec les organes de prise (6) pour la transmission de la force de commande par le biais de transmetteurs de force (7) se déployant chacun avec une composante dans la direction transversale du véhicule,
**caractérisé en ce que** la commande comprend un organe de commande (9) disposé au moins presque dans la direction transversale (q) du véhicule et dans le plan des transmetteurs de force (7), et une transmission (11) changeant la direction du mouvement d'un deuxième transmetteur de force (7) est déplaçable par le biais d'un organe de couplage (10) qui est déplaçable d'une façon rectiligne et parallèle audit organe de commande (9) et qui est relié à un premier transmetteur de force (7).

2. Véhicule cabriolet (1) selon la revendication 1, **caractérisé en ce que** la commande comprend au moins un élément de transmission (10; 13), qui est déplaçable d'une façon rectiligne, est relié à un transmetteur de force (7), et présente un premier moyen de couplage (13a) pour la prise indirecte ou directe de l'organe de commande (9) et un deuxième moyen de couplage (13b) pour la prise d'un mécanisme d'actionnement d'urgence manuel (14).

3. Véhicule cabriolet (1) selon la revendication 2, **caractérisé en ce qu'**au moins l'un des moyens de couplage (13a; 13b) est formé par une section de crémaillère.

4. Véhicule cabriolet (1) selon l'une quelconque des revendications 2 ou 3, **caractérisé en ce que** les moyens de couplage (13a; 13b) sont perpendiculaires l'un à l'autre.

5. Véhicule cabriolet (1) selon l'une quelconque des revendications 2 à 4, **caractérisé en ce qu'**un premier élément de transmission (10) est disposé parallèlement à un piston extensible d'un organe de commande hydraulique (9).

6. Véhicule cabriolet (1) selon la revendication 5, **caractérisé en ce que** le premier élément de transmission (10) peut mettre en rotation une roue dentée (12) qui peut elle-même entraîner un deuxième élément de transmission (13) qui est déplaçable d'une façon rectiligne.

7. Véhicule cabriolet (1) selon la revendication 6, **caractérisé en ce que** les éléments de transmission (10; 13) sont déplaçables en directions opposées.

8. Véhicule cabriolet (1) selon l'une quelconque des revendications 1 à 7, **caractérisé en ce que** les transmetteurs de force (7) se présentent sous la forme de bielles de traction-poussée.

9. Module de fermeture (8) destiné à commander au moins deux organes de prise mobiles (6) par le biais d'au moins une commande (9) pour ceux-ci, ladite commande coopérant avec les organes de prise pour la transmission de la force de commande par le biais de transmetteurs de force (7) se déployant chacun avec une composante dans la direction transversale (q) du véhicule, pour un véhicule cabriolet selon l'une quelconque des revendications 1 à 8.
